# EUROPÄISCHE PATENTSCHRIFT

(11) **EP 3 891 005 B1**
(45) Veröffentlichungstag und Bekanntmachung des Hinweises auf die Patenterteilung: **07.02.2024**
(21) Anmeldenummer: 19817589.5
(22) Anmeldetag: 03.12.2019
(51) Int. Cl.: B60K 25/02

(54) **VERBRENNUNGSKRAFTMASCHINE MIT KRAFTABNAHME MIT WINKELAUSGLEICH UND ÖLGESCHMIERTER ABTRIEBSVERZAHNUNG**
INTERNAL COMBUSTION ENGINE WITH POWER TAKE OFF HAVING ANGULAR COMPENSATION AND OIL LUBRICATED OUTPUT GEARING
MOTEUR THERMIQUE AVEC PRISE DE FORCE COMPRENANT UNE COMPENSATION ANGULAIRE ET UN ENGRENAGE DE SORTIE LUBRIFIÉ AVEC DE L'HUILE

(30) Priorität: 06.12.2018 DE 102018009522
(43) Veröffentlichungstag der Anmeldung: 13.10.2021
(73) Patentinhaber: DEUTZ Aktiengesellschaft, 51149 Köln (DE)
(72) Erfinder: JOISTEN-PIERITZ, Joachim, 53925 Kall-Steinfeld (DE); LEMME, Werner, 51503 Rösrath (DE)
(86) Internationale Anmeldenummer: PCT/EP2019/000330
(87) Internationale Veröffentlichungsnummer: WO 2020/114621

(56) Entgegenhaltungen:
- EP-A1- 0 401 596
- WO-A1-2018/117944
- DE-A1- 10 023 118
- GB-A- 2 504 168

## Beschreibung

Die Erfindung betrifft eine Verbrennungskraftmaschine mit wenigstens einer Kraftabnahme-Konsole, zum Beispiel zum Antreiben einer Hydraulikpumpe, nach dem Oberbegriff des Anspruchs 1.

Eine solche Verbrennungskraftmaschine mit Kraftabnahme-Konsole ist aus der DE 100 23 118 A1 bekannt.

Bei anderen Ausführungsformen einer Verbrennungskraftmaschine nach dem Stand der Technik erfolgt die Kraftabnahme für Hydraulikpumpen bislang durch eine starr gelagerte und zylindrisch innenverzahnte Hohlwelle.

Die Schmierung der Verzahnung am Antriebsstummel der Hydraulikpumpe erfolgt bislang durch eine Fettfüllung der Hohlwelle.

Eine Winkelschiefstellung bei zweiseitigem Anbau einer Hydraulikpumpe am Kraftabnahme (PTO bzw. POWER TAKE OFF) -Gehäuse - eine Pumpe vorne und eine Pumpe hinten - kann zu einem Zwang auf die gemeinsame Antriebswelle führen, der dann nicht ausgeglichen werden kann. Die Fettfüllung der Hohlwelle zur Schmierung der Antriebsverzahnung der Hydraulikpumpen hält nur für einen begrenzten Zeitraum vor. Wenn die Schmierung an dieser Stelle nicht sichergestellt ist, kommt es zu starker Reibrostbildung und schließlich zum Ausfall der Antriebsverzahnung.

EP 0 401 596 A1 offenbart ein Übersetzungsgetriebe zur direkten Verbindung der Kurbelwelle eines Hauptmotors eines Schiffs an einem freien Wellen- bzw. Flanschende zum Antrieb eines Aggregates. Drehmoment wird über eine doppelkardanische, im Stillstand schaltbare Zahngelenkspindel von der Kurbelwelle zum Übersetzungsgetriebe kraftschlüssig übertragen. Die Zahngelenkspindel weist eine ballige Außenverzahnung auf, die sich bei Kraftübertragung winkel- und axialbeweglich in einer geraden Innenverzahnung eines Zahnkranzes, der mit der Kurbelwelle verbunden ist, zentriert.

Ein weiteres Beispiel eines Power Take-offs (PTO) ist in der WO 2018/117 944 A1 beschrieben. Hierbei ist ein PTO zwischen einem Motor und einem Hauptgetriebe angeordnet und mit einer Zusatzausgangswelle zum Antreiben eines Aggregats verbunden. Hierzu ist die Zusatzausgangswelle über eine Getriebestufe mit Stirnrädern mit einer vom Motor angetriebenen Eingangswelle antriebsverbunden. Die Zusatzausgangswelle weist zum Verbinden mit einer Welle eines anzutreibenden Aggregats eine Innenverzahnung auf.

Es ist die Aufgabe der vorliegenden Erfindung, eine Kompensation von nicht vermeidbaren, geringen Winkelschiefstellungen zu ermöglichen. Außerdem ist eine permanente Schmierstoffversorgung der Zahnwellen zu realisieren, damit langfristig ein Verschleiß an der Antriebsverzahnung ausgeschlossen werden kann.

Die Aufgabe wird durch eine Verbrennungskraftmaschine mit wenigstens einer Kraftabnahme-Konsole mit den Merkmalen des Anspruchs 1 gelöst. Ausführungsbeispiele ergeben sich aus den abhängigen Ansprüchen.

Um eine geringfügige Schiefstellung von Abtriebselementen zur Hohlwelle zu ermöglichen, erfolgt die Kraftübertragung durch eine an der Außenseite bogenförmig verzahnte und auf der Innenseite, zum Beispiel gradlinig, verzahnte Hülse. Die Schmierung der Verzahnung erfolgt durch eine kontinuierliche Druckölschmierung.

Eine vorteilhafte Weiterbildung sieht vor, dass in der Kraftabnahme-Konsole ein gelagertes Zahnrad angeordnet ist, wobei das Zahnrad auf der Welle der Kraftabnahme-Konsole angeordnet ist.

Eine weitere vorteilhafte Weiterbildung sieht vor, dass ein motoreigenes Zahnrad mit dem in der Kraftabnahme-Konsole gelagerten Zahnrad kommuniziert.

Eine vorteilhafte Weiterbildung sieht vor, dass die Kraftabnahme-Konsole wenigstens eine zweite Welle aufweist, die eine mit der innenverzahnten Hülse in Verbindung stehende Außenverzahnung aufweist.

Eine andere vorteilhafte Weiterbildung sieht vor, dass die innenverzahnte Hülse innen eine ballige Verzahnung oder zylindrische Verzahnung aufweist.

Weiter ist vorteilhafterweise vorgesehen, dass die innenverzahnte Hülse mit zwei Seeger-Ringen in der Welle fixiert ist.

Eine vorteilhafte Weiterbildung sieht vor, dass im Bereich des Gleitlagers wenigstens eine Drosselstelle angeordnet ist und dass die Welle eine Bohrung aufweist, die der Druckentlastung bzw. der Ölversorgung dient.

Hierbei ist von Vorteil, dass Winkelfehler ausgeglichen werden können und ein axialer Längenausgleich gegeben ist. Mit der Hohlwelle können durch Austausch der Hülsen alle notwendigen Verzahnungsformen (SAE oder DIN Verzahnungen) im Abtrieb dargestellt werden. Weiter ist ein Wechsel auf eine andere Abtriebsverzahnung ohne weiteres auch später noch beim Kunden möglich. Eine Frischölschmierung der Verzahnung vermeidet dauerhaft Reibrostbildung und Verschleiß an der Verzahnung. Gegenüber einer Depot-Fettfüllung ist die ölgeschmierte Variante wartungsfrei. Die Umstellung von im Stand der Technik üblicher Wälzlagerung auf Gleitlagerung führt zu einer deutlichen Kostenreduktion.

Die Erfindung wird nachfolgend anhand der in den Zeichnungen dargestellten Ausführungsbeispiele erläutert, es zeigt:

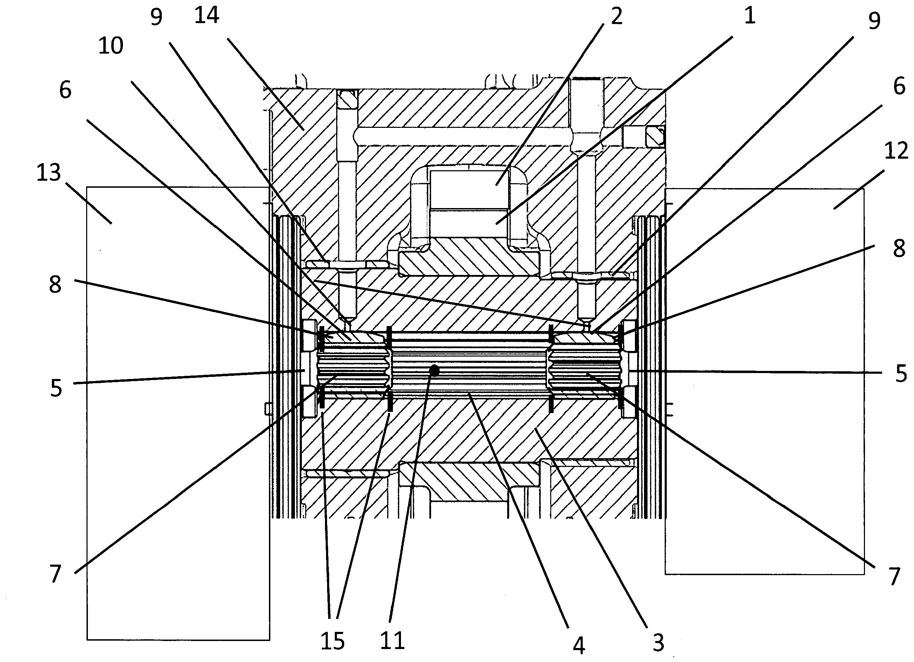

- Figur 1: eine Kraftabnahme-Konsole mit Winkelausgleich und ölgeschmierter Abtriebsverzahnung an einer Verbrennungskraftmaschine.

In der Figur 1 wird die an einer Verbrennungskraftmaschine angeordnete Kraftabnahme mit einem Winkelausgleich und ölgeschmierter Abtriebsverzahnung dargestellt. Das in der PTO-Konsole gelagerte Zahnrad 1 kämmt mit einem motoreigenen Zahnrad 2. Das Zahnrad befindet sich auf einer Welle 3 bzw. ist selber Bestandteil der Welle. Diese Welle weist innen eine Verzahnung auf 4. Als Kraftübertragungsglied ist eine zweite Welle vorhanden 5. Diese zweite Welle weist verschiedene Außenverzahnungen auf. Die mit der Zahnradwelle kämmende Verzahnung auf der inneren Welle ist ballig 6 ausgeführt. Die beiden Enden der inneren Welle weisen je eine zylindrische oder ggfs. ebenfalls ballige Verzahnung 7 auf. Die Kraftabnahmen zu den anzutreibenden Zusatzgeräten erfolgt dann über innenverzahnte Hülsen 8, die einerseits mit der inneren Welle und andererseits mit den Zusatzgeräten über diese Verzahnung verbunden sind. Durch diese Konstruktion ist eine gewisse kardanähnliche Bewegung möglich, die Verschleiß durch fertigungstechnische Toleranzen reduziert. Die Lagerung des PTO-Zahnrades bzw. der Welle 3 erfolgt z. B. durch ein Gleitlager 9. Eine Ölversorgung für die Mitnehmerverzahnungen wird vorteilhafterweise durch mindestens ein Gleitlager dargestellt. Dazu wird nach dem Gleitlager 9 eine Drosselstelle 10 vorgesehen. Ein Ablauf zur Druckentlastung des Welleninneren wird z. B. durch eine Bohrung 11 der Antriebswelle dargestellt. Eine Hydraulikpumpe 12 und/oder ein Luftpresser 13 sind im Ausführungsbeispiel gemäß Figur 1 an der Kraftabnahme- (PTO-) Konsole 14 angeordnet. Die innenverzahnte Hülse 8 wird in der Welle 3 mittels zweier Seeger-Ringe 15 fixiert.

### Bezugszeichenliste

- 1: in der Kraftabnahme-Konsole gelagertes Zahnrad
- 2: motoreigenes Zahnrad
- 3: Welle
- 4: Innenverzahnung der Welle
- 5: zweite Welle
- 6: ballige Verzahnung auf der inneren Welle
- 7: zylindrische Verzahnung
- 8: innenverzahnte Hülse
- 9: Gleitlager
- 10: Drosselstelle
- 11: Bohrung der Antriebswelle
- 12: Hydraulikpumpe
- 13: Luftpresser
- 14: Kraftabnahme Konsole
- 15: Seeger-Ring

## Patentansprüche

1. Verbrennungskraftmaschine mit wenigstens einer Kraftabnahme-Konsole (14) umfassend:
eine Welle (3), die als Hohlwelle gestaltet ist und innen eine Verzahnung (4) aufweist, und
wenigstens eine innenverzahnte Hülse (8), die eine ballige Verzahnung (6) an einer Außenoberfläche aufweist, mit der die Hülse (8) mit der Welle (3) verbunden ist,
**dadurch gekennzeichnet, dass** die Welle (3) durch wenigstens ein Gleitlager (9) in der Kraftabnahme-Konsole (14) gelagert ist, und
dass eine Ölversorgung der Verzahnungen durch mindestens eines der Gleitlager hindurch erfolgt.

2. Verbrennungskraftmaschine nach Anspruch 1,
**dadurch gekennzeichnet, dass** ein in der Kraftabnahme-Konsole (14) gelagertes und auf der Welle (3) angeordnetes Zahnrad (1) vorgesehen ist.

3. Verbrennungskraftmaschine nach Anspruch 2,
**dadurch gekennzeichnet, dass** die Verbrennungskraftmaschine ferner ein motoreigenes Zahnrad (2) aufweist, das mit dem in der Kraftabnahme-Konsole gelagertem Zahnrad (1) kommuniziert.

4. Verbrennungskraftmaschine nach einem der vorgenannten Ansprüche, **dadurch gekennzeichnet, dass** die Kraftabnahme-Konsole (14) wenigstens eine zweite Welle (5) aufweist, die eine mit der innenverzahnten Hülse (8) in Verbindung stehende Außenverzahnung aufweist.

5. Verbrennungskraftmaschine nach einem der vorgenannten Ansprüche, **dadurch gekennzeichnet, dass** die innenverzahnte Hülse (8) innen eine ballige Verzahnung oder zylindrische Verzahnung (7) aufweist.

6. Verbrennungskraftmaschine nach einem der vorgenannten Ansprüche, **dadurch gekennzeichnet, dass** die innenverzahnte Hülse (8) mit zwei Seeger-Ringen (15) in der Welle (3) fixiert ist.

7. Verbrennungskraftmaschine nach einem der vorgenannten Ansprüche, **dadurch gekennzeichnet, dass** im Bereich des Gleitlagers (9) wenigstens eine Drosselstelle (10) angeordnet ist und
dass die Welle (3) eine Bohrung (11) aufweist, die der Druckentlastung bzw. der Ölversorgung dient.

## Claims

1. An internal combustion engine having at least one power take-off console (14), comprising:
a shaft (3) designed as a hollow shaft and having gearing (4) on the inside, and
at least one internally-geared sleeve (8) having a crowned gearing (6) on an outside surface, the sleeve (8) being connected to the shaft (3) by way of the crowned gearing,
**characterized in that** the shaft (3) is mounted in the power take-off console (14) by way of at least one slide bearing (9), and
that oil is supplied to the gearings through at least one of the slide bearings.

2. The internal combustion engine according to claim 1,
**characterized in that** a gearwheel (1) is provided which is mounted in the power take-off console (14) and arranged on the shaft (3).

3. The internal combustion engine according to claim 2,
**characterized in that** the internal combustion engine further comprises an engine-side gearwheel (2) which communicates with the gearwheel (1) mounted in the power take-off console.

4. The internal combustion engine according to one of the preceding claims,
**characterized in that** the power take-off console (14) comprises at least a second shaft (5) which has an outer gearing which is in contact with the internally-geared sleeve (8).

5. The internal combustion engine according to one of the preceding claims,
**characterized in that** the internally-geared sleeve (8) has a crowned gearing or a cylindrical gearing (7) on the inside.

6. The internal combustion engine according to one of the preceding claims,
**characterized in that** the internally-geared sleeve (8) is fixed in the shaft (3) using two Seeger rings (15).

7. The internal combustion engine according to one of the preceding claims,
**characterized in that** at least one restriction point (10) is arranged in the area of the slide bearing (9) and
that the shaft (3) has a bore (11) which serves to relieve pressure and to supply oil.

## Revendications

1. Moteur à combustion interne avec au moins une console de prise de force (14), comprenant :
un arbre (3) est conçu comme un arbre creux et présentant à l'intérieur une denture (4), et
au moins une douille à denture intérieure (8) présentant une denture bombée (6) sur une surface extérieure, avec laquelle la douille (8) est reliée à l'arbre (3),
**caractérisé en ce que** l'arbre (3) est supporté par au moins un palier lisse (9) dans la console de prise de force (14), et
**en ce qu'**une alimentation en huile des dentures s'effectue à travers au moins l'un des paliers lisses.

2. Moteur à combustion interne selon la revendication 1,
**caractérisé en ce qu'**il est prévu une roue dentée (1) logée dans la console de prise de force (14) et disposée sur l'arbre (3).

3. Moteur à combustion interne selon la revendication 2,
**caractérisé en ce que** le moteur à combustion interne comprend en outre une roue dentée (2) propre au moteur, qui communique avec la roue dentée (1) logée dans la console de prise de force.

4. Moteur à combustion interne selon l'une des revendications précédentes,
**caractérisé en ce que** la console de prise de force (14) présente au moins un deuxième arbre (5) présentant une denture extérieure en liaison avec la douille à denture intérieure (8).

5. Moteur à combustion interne selon l'une des revendications précédentes,
**caractérisé en ce que** la douille à denture intérieure (8) présente à l'intérieur une denture bombée ou une denture cylindrique (7).

6. Moteur à combustion interne selon l'une des revendications précédentes,
**caractérisé en ce que** la douille à denture intérieure (8) est fixée dans l'arbre (3) à l'aide de deux anneaux Seeger (15).

7. Moteur à combustion interne selon l'une des revendications précédentes,
**caractérisé en ce qu'**au moins un point d'étranglement (10) est disposé dans la zone du palier lisse (9), et
**en ce que** l'arbre (3) présente un alésage (11) servant à la décharge de pression ou à l'alimentation en huile.
